# FASCICULE DE BREVET EUROPEEN

(11) **EP 1 688 818 B1**
(45) Date de publication et mention de la délivrance du brevet: **18.11.2009**
(21) Numéro de dépôt: 06300043.4
(22) Date de dépôt: 19.01.2006
(51) Int. Cl.: G06F 21/24

(54) **Procédé de gestion sécurisée de l'éxécution d'une application**
Verfahren für Sichere Verwaltung des Ablaufs eines Anwenderprogramms
Process for the secure management of the execution of an application

(30) Priorité: 04.02.2005 FR 0550323
(43) Date de publication de la demande: 09.08.2006
(73) Titulaire: Societé Française du Radiotéléphone, 92915 Paris la Défense Cedex (FR)
(72) Inventeur: Hybre, Jean, 78420 Carrieres sur seine (FR); Wary Jean-Philippe, 92340 Bourg la Reine (FR)
(74) Mandataire: Schmit, Christian Norbert Marie

(56) Documents cités:
- EP-A- 0 813 132
- EP-A- 1 422 958
- US-A1- 2003 088 786
- LINUXDEVICES.COM: "HOT TOPIC: Linux on a roll in mobile phones" INET, [Online] 13 février 2003 (2003-02-13), XP002341583 linuxdevices.com Extrait de l'Internet: URL:http://www.linuxdevices.com/news/NS921 7324497.html> [extrait le 2005-08-22]
- D. RUSSELL, G.T. GANGEMI: "Computer Security Basics" O'REILLY, 1 juillet 1992 (1992-07-01), pages 66-72, XP002341584 USA
- A. GRÜNBACHER: "POSIX ACCESS CONTROL LISTS ON LINUX" INET, [Online] 4 avril 2003 (2003-04-04), XP002341585 SUSE Extrait de l'Internet: URL:http://www.suse.de/~agruen/acl/linux-a cls/online/> [extrait le 2005-08-22]
- Y. LEPAGE, P. IARRERA: "Unix Bible" IDG BOOKS WORLDWIDE, INC, 31 décembre 2000 (2000-12-31), pages 4-16, XP002341586 Foster City, USA
- BALFANZ D: "Usable access control for the world wide web" COMPUTER SECURITY APPLICATIONS CONFERENCE, 2003. PROCEEDINGS. 19TH ANNUAL 8-12 DEC. 2003, PISCATAWAY, NJ, USA,IEEE, 8 décembre 2003 (2003-12-08), pages 406-415, XP010675112 ISBN: 0-7695-2041-3

## Description

La présente invention a pour objet un procédé de gestion sécurisée de l'exécution d'une application. Le domaine de l'invention est celui de la téléphonie mobile et plus particulièrement des terminaux intelligents raccordés aux réseaux de téléphonie mobile. Un terminal dit « intelligent » dans la suite du texte est un téléphone mobile apte à télécharger des contenus multimédias ou actifs. Un contenu actif est un programme pouvant s'exécuter sur un téléphone mobile et donc mettre en oeuvre les fonctionnalités dudit téléphone mobile. On considère ici que tous les téléphones dont il est question sont des terminaux intelligents. Un téléphone intelligent permet de gérer différentes ressources internes, ces ressources étant accessibles des différents ports d'extension ou des contenus téléchargés multimédias ou actifs, la présente définition n'est pas limitative de l'invention.

Un but de l'invention est de sécuriser l'accès aux ressources du téléphone mobile par les programmes s'exécutant sur ledit téléphone mobile.

Dans l'état de la technique on connaît des environnements d'exécution de code sécurisés. Ces environnements sont basés sur la mise en oeuvre d'une "machine virtuelle" qui est une surcouche d'un système d'exploitation du téléphone mobile. Cette machine virtuelle exécute des programmes spécifiquement écrits pour elle. La machine virtuelle est donc nécessaire à la mise en oeuvre de ces programmes. La machine virtuelle est un intermédiaire entre le programme spécifique et le système d'exploitation du téléphone mobile, donc entre le programme spécifique et les fonctionnalités du téléphone mobile.

Cependant, d'une part le fait pour un téléphone d'embarquer une machine virtuelle n'empêche pas la mise en oeuvre d'autres programmes non spécifiques accédant aux fonctionnalités du téléphone mobile. Une politique de sécurité mise en oeuvre par la machine virtuelle est donc définie uniquement pour les programmes spécifiques.

D'autre part de telles politiques restent confinées au niveau du téléphone mobile, sans interaction prévue avec la carte SIM par exemple. Un tel modèle de sécurité est par exemple le modèle MIDP 2.0 correspondant au langage et à la machine virtuelle Java.

Le document XP 002341584 C "Computer Security Basics" O'Reilly, Russell & gangemi) décrit un contrôle d'accès à des fichiers dans un ordinateur.

Dans l'état de la technique on connaît aussi des politiques de sécurité gérées par domaine, chaque application appartenant à un domaine. Un domaine définit les droits d'accès à des fonctionnalités précisément définies, voire à la totalité des fonctionnalités du téléphone. Dans ce cas toute application doit appartenir à un domaine. Ainsi, si une application a besoin de droits spécifiques il faut définir et lui allouer un nouveau domaine, c'est-à-dire redéfinir des droits pour toutes les fonctionnalités du téléphone mobile dans lequel l'application s'exécute, y compris pour les fonctionnalités que l'application n'utilise pas. Cela va occuper un volume de mémoire important.

Dans la gestion de droits par domaine, la mise à jour des droits se fait par domaine, c'est-à-dire pour toutes les applications appartenant audit domaine. Mettre à jour des droits pour une application spécifique indépendamment d'autres applications est donc impossible.

Dans l'invention on résout ces problèmes en associant à chaque application un identifiant. Lorsqu'une application est active, une instance de celle-ci est gérée par le système d'exploitation du téléphone. Cette gestion se réalise généralement au travers d'un contexte mémoire descriptif de l'état courant de cette instance d'application, des ressources consommées, des systèmes de communications utilisés, des processus pères et fils reliés à l'application à un instant donné (la liste est non exhaustive et n'est pas limitative de l'invention). Ce contexte est le point d'entrée du système d'exploitation pour gérer les priorités et les interruptions entre ou inter applications. Dans le cadre de l'invention, l'identifiant de l'application est une donnée dont la valeur est constante, donnée renseignée dans le contexte mémoire géré par le système d'exploitation pour l'instance courante de l'application active. Dans le cas où plusieurs instances de la même application sont actives en même temps, le système d'exploitation gère plusieurs contextes mémoires différents, mais la valeur de l'identifiant d'application a alors la même valeur pour l'ensemble des contextes puisque nous sommes face au même code applicatif.

Dans l'invention chaque ressource est clairement identifiée et identifiable en tant que ressource lorsqu'une application cherche à y accéder. Cette identification de la ressource peut être implicite car dans ce cas elle se réalise au travers de l'usage d'une interface programmatique (API) clairement identifiée ou peut être explicite lors de l'usage d'une adresse mémoire clairement incluse dans un segment mémoire lui-même identifié comme une ressource à protéger. Une définition plus exhaustive de la notion de ressource est fournie plus loin.. Dans l'invention chaque ressource est associée à une table d'identifiants d'applications, chaque identifiant dans cette liste étant associé à un droit relatif à la ressource. Lorsque l'application cherche à accéder à une ressource, ou fonctionnalité, du téléphone mobile, le système d'exploitation parcourt la table associée à la ressource pour déterminer si l'application est identifiée et extraire les droits que possède l'application relativement à la ressource. La suite de l'exécution de l'application est conditionnée par la lecture de ces droits.

Dans l'invention chaque ressource est associée à un propriétaire seul habilité à modifier la table associée à la ressource.

Dans l'invention il est donc possible de définir finement les droits associés à une application et de les faire évoluer sans influencer les autres applications.

L'invention a donc pour objet un procédé de gestion sécurisée de l'exécution d'applications sur un téléphone mobile, une application accédant à des ressources du téléphone mobile gérées par un système d'exploitation caractérisé en ce qu'une ressource du téléphone mobile est identifiable et associée à une table d'identifiants d'applications autorisées ou non à mettre en oeuvre la ressource, la ressource ayant un propriétaire, seul autorisé à mettre à jour la liste d'applications, le système d'exploitation appliquant pour chaque ressource accédée les droits correspondant à l'application accédante, chaque application comportant un identifiant unique.

Avantageusement l'invention est aussi caractérisée en ce que le système d'exploitation gère une table dynamique et temporaire par identifiant d'application permettant de maintenir les autorisations d'usage des ressources déjà autorisées pour chacune des applications.

Avantageusement l'invention est aussi caractérisée en ce que le système d'exploitation relâche les autorisations d'accès à une ressource pour l'application identifiée à l'échéance du temps alloué, ou à la sortie d'un espace géographique prédéterminé.

Avantageusement l'invention est aussi caractérisée en ce que les ressources du système d'exploitation comportent des mémoires et/ ou, zones mémoires du téléphone mobile.

Avantageusement l'invention est aussi caractérisée en ce que les ressources du système d'exploitation comportent des moyens de communications pour le téléphone mobile.

Avantageusement l'invention est aussi caractérisée en ce que les propriétaires des ressources sont au moins dans la liste composée d'utilisateurs du téléphone, de l'opérateur de téléphonie mobile, du constructeur du téléphone mobile et de fournisseurs de contenu.

Avantageusement l'invention est aussi caractérisée en ce que l'accès aux ressources est centralisé au niveau d'une interface programmatique (API), cette interface permettant l'accès à une ressource si l'application cherchant à accéder à cette ressource possède les droits requis.

Avantageusement l'invention est aussi caractérisée en ce que chaque table d'identifiants d'applications associée à une ressource comporte un identifiant correspondant aux applications non listées dans la table pour définir les droits par défaut d'une application.

Avantageusement l'invention est aussi caractérisée en ce que des droits par défauts peuvent être définis pour les accès aux ressources d'un même propriétaire, cette définition pouvant être par exemple réalisée lors de la configuration du mobile en sortie de fabrication.

Avantageusement l'invention est aussi caractérisée en ce que une table d'identifiants comportant des entrées correspondant à des certificats électroniques permet de rassembler sous un même propriétaire plusieurs familles de certificats électroniques.

Avantageusement l'invention est aussi caractérisée en ce que un accès à une ressource est compris dans l'ensemble comportant au moins les éléments suivants : lecture, écriture, modification, destruction, exécution, de données ou de code exécutable.

Avantageusement l'invention est aussi caractérisée en ce que, au démarrage du téléphone un programme de démarrage vérifie l'intégrité des tables d'identifiants et de la partie du système d'exploitation accédant à ces tables d'identifiants.

Avantageusement l'invention est aussi caractérisée en ce que au démarrage du téléphone un programme de démarrage vérifie l'intégrité des parties du système d'exploitation en charge des fonctions de contrôle et de sécurité du téléphone, ces contrôles au démarrage du mobile permettant de garantir que seul le système et exclusivement le système d'exploitation original du constructeur est installé dans le téléphone et utilisé par celui-ci.

Avantageusement l'invention est aussi caractérisée en ce que un droit d'accès à une ressource est compris dans l'ensemble comportant au moins les éléments suivants : accès autorisé, accès autorisé une fois, accès autorisé N fois, N étant paramétrable, accès refusé, demander l'autorisation à l'utilisateur une fois, demander l'autorisation à l'utilisateur pour chaque accès, demander l'autorisation pour N accès, N étant paramétrable, demander la saisie d'un code une fois, demander la saisie d'un code pour chaque accès, demander la saisie d'un code pour N accès, N étant paramétrable, demander un calcul ou un challenge cryptographique pour autoriser l'accès une fois, demander un calcul ou un challenge cryptographique pour autoriser chaque accès, demander un calcul ou un challenge cryptographique pour autoriser N accès, N étant paramétrable.

Avantageusement l'invention est aussi caractérisée en ce que la table d'identifiants d'applications a une taille dynamique.

Avantageusement l'invention est aussi caractérisée en ce que chaque nouvelle application est analysée pour mettre à jour les tables d'identifiants d'applications.

Un mode de réalisation de l'invention est décrite dans la revendication 1, ainsi que des modes alternatifs dans les revendications dépendantes.

L'invention sera mieux comprise à la lecture de la description qui suit et à l'examen des figures qui l'accompagnent. Celles-ci sont présentées à titre indicatif et nullement limitatif de l'invention. Les figures montrent :
Figure 1 : une illustration de moyens permettant la mise en oeuvre du procédé selon l'invention.
Figure 2 : une illustration d'étapes du procédé selon l'invention.

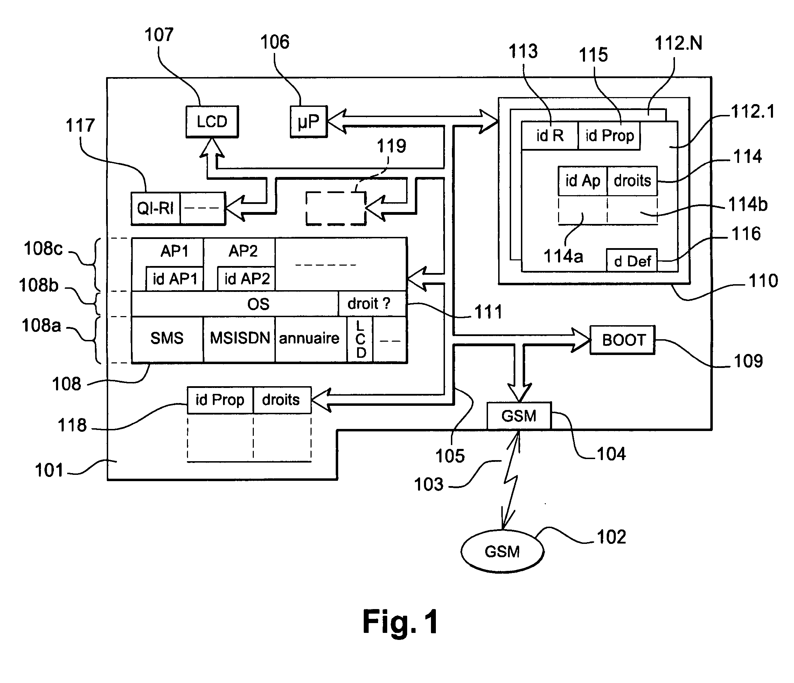

La figure 1 montre un téléphone 101 mobile connecté à un réseau 102 de téléphonie mobile via une antenne 103 connectée à des circuits 104 interface entre le réseau 102 et un bus 105 interne du téléphone 101.

Le téléphone 101 comporte aussi en particulier mais de manière non limitative, un microprocesseur 106, un écran 107, une mémoire 108 de programme, une mémoire 109 de démarrage et une mémoire 110 de tables d'identifiants. Les éléments 106 à 110 sont interconnectés par le bus 105. Le téléphone 101 comporte d'autres organes non représentés comme un clavier, un microphone,..., la liste n'est pas exhaustive.

Lorsque l'on prête une action à un appareil celle-ci est en fait réalisée par un microprocesseur de cet appareil commandé par des codes instructions enregistrés dans une mémoire de programme dudit appareil. On prête aussi une action à une application. Cela signifie qu'une partie des codes instructions constituant l'application est exécutée par le microprocesseur.

La mémoire 109 comporte des codes instructions exécutés par le microprocesseur 106 à la mise sous tension du téléphone 101. Dans la pratique il s'agit d'une ROM ou d'une PROM, ce qui rend la corruption des codes instructions qui y sont enregistrés très difficile et réservée à des spécialistes.

La mémoire 108 est la mémoire de programme du téléphone 101. Pour mieux comprendre l'invention on a découpé la mémoire 108 en 3 zones. Une zone 108a de ressources, une zone 108b de système d'exploitation et plus particulièrement de gestion de l'accès aux ressources, et une zone 108c d'applications utilisables par un utilisateur du téléphone 101. La zone 108a correspond à ce qui est communément appelé le "firmware" et comporte les pilotes d'accès aux ressources matérielles.

Une ressource est ici un concept général. Il s'agit dans la pratique d'une ressource matérielle, d'une fonctionnalité du téléphone 101 ou d'un ou plusieurs objets.

La ressource matérielle peut être une zone mémoire du téléphone 101, cette zone étant dans le téléphone, dans un composant amovible de stockage ou d'extension des fonctionnalités du téléphone, ou sur une carte SIM/USIM connectée au téléphone 101. Dans le cas d'un contenu multimédia stocké dans le téléphone, la ressource peut être définie comme la zone de stockage de ces contenus multimédias ou comme plusieurs zones, chacune correspondant à un contenu unique. Une ressource peut aussi être décrite comme une plage d'adresses sur un bus.

Une ressource peut également être vue comme une fonction. De telles fonctions sont par exemple lire ou écrire une zone mémoire, lire ou écrire sur un port d'extension (Infrarouge, Bluetooth, liaison série, la liste n'étant pas limitative...), utiliser les fonctionnalités d'un coprocesseur ou d'un composant actif au travers d'une plage d'adresse mémoire ou d'une interface programmatique (API), lire, écrire, envoyer, ou recevoir un SMS, un MMS, un message, un courriel, lire l'IMEI du téléphone, lire l'identifiant de cellule de station de base à laquelle le téléphone est connecté, lire la localisation géographique du téléphone quel que soit le système d'acquisition de coordonnées géographiques utilisé (par exemple au travers d'une interface programmatique avec un système GPS), lire ou écrire dans l'annuaire du téléphone (l'annuaire correspondant en fait à une zone mémoire), afficher ou effacer un objet sur l'écran, envoyer une commande vers la carte SIM/USIM,..., la liste n'est pas exhaustive.
Une ressource peut aussi correspondre à un ou plusieurs objets différents (annuaire, entrée dans un annuaire, données du calendrier, un ou plusieurs jeux, un morceau de musique, un film..., cette liste n'est pas limitative de l'invention)

Les ressources peuvent constituer aussi ce qu'on peut appeler une interface programmatique: Une interface programmatique est un ensemble de fonctions qui peuvent être mises en oeuvre par une application. Dans notre exemple une interface centralisée regroupe toutes les fonctions permettant l'accès aux ressources du téléphone. Il n'existe pas d'autre moyen pour une application d'accéder à une ressource que de mettre en oeuvre une fonction de l'interface centralisée.

La zone 108 correspond au système d'exploitation qui comporte la plupart du temps la zone 108a. Nous l'avons ici séparée pour mettre en évidence le fait que le système d'exploitation comporte un module 111 de vérification des droits d'accès aux ressources.

La zone 108c comporte les codes instructions des applications installées sur le téléphone 101. Une application est, par exemple, un agenda, une calculatrice, un client de messagerie (SMS, MMS, courriel ou autre), des jeux, des visionneuses mono ou multimédia, ..., la liste n'est pas exhaustive. Chaque application est identifiée par un identifiant d'application.

Le mode de représentation de la mémoire 108 illustre le fait qu'une application cherchant à accéder à une ressource du téléphone mobile le fait à travers le système d'exploitation, donc à travers le module 111 de vérification des droits d'accès aux ressources. Chaque ressource est identifiée par un identifiant de ressource.

La mémoire 110 est subdivisée en enregistrements 112.1 à 112.N, chaque enregistrement étant identifié par un identifiant 113 de ressource. Un enregistrement comporte aussi une table 114 associant des identifiants 114a d'applications à des droits 114b. Des droits sont par exemples, lecture, écriture, accès soumis à requête d'autorisation, accès soumis à la saisie d'un code.

La table 114, donc l'enregistrement 112, est de taille variable en fonction du nombre d'identifiants d'applications qu'elle contient. Une telle table est agrandie quand besoin est. Cela permet une gestion efficace de la mémoire du téléphone mobile. En effet pour l'inscription d'un nouveau droit, si la table est trop petite, alors elle est agrandie dynamiquement.

Un enregistrement de la mémoire 114 comporte aussi un champ 116 comportant des droits par défaut. Ces droits sont appliqués lorsqu'une application cherchant à accéder à la ressource n'est pas décrite par un identifiant spécifique dans l'enregistrement de la mémoire 110 correspondant à la ressource.

Dans une variante de l'invention un enregistrement 112 comporte aussi un identifiant 115 de propriétaire. Un identifiant de propriétaire est soit un mot alphanumérique arbitraire, soit une signature numérique du contenu d'une ressource, ou d'une application, par un certificat. La signature ainsi obtenu est associé à la partie publique de certificat ayant permis d'obtenir la signature. Il est ainsi possible de vérifier la signature et de confirmer par la même l'identité du propriétaire.

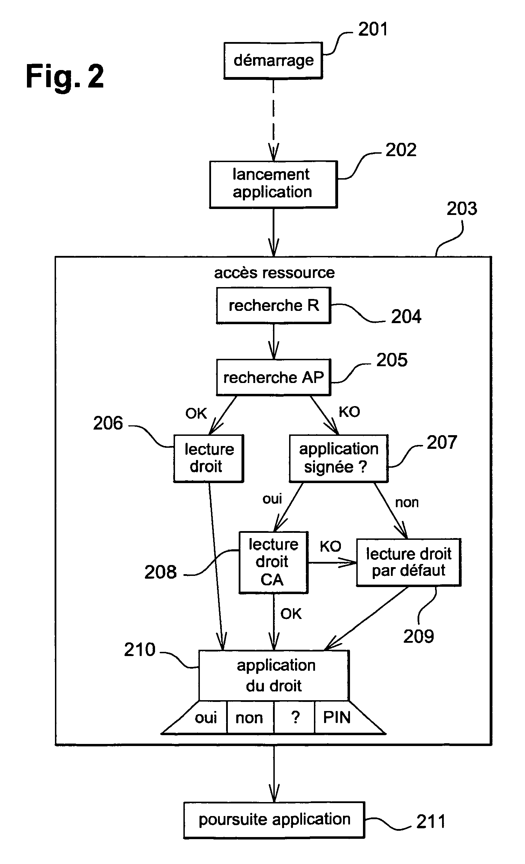

La figure 2 montre une étape 201 préliminaire dans laquelle un utilisateur du téléphone 101 le met sous tension. Le microprocesseur exécute alors les codes instructions enregistrés dans la mémoire 109. Dans une variante de l'invention les codes instructions de la mémoire 109 permettent de valider le module 111 et la mémoire 110, en effectuant une somme de contrôle par exemple ou une validation cryptographique de l'intégrité avec preuve d'origine du code, permettant d'établir que le constructeur du téléphone est bien à l'origine de la mise en oeuvre des modules 111 et de la mémoire 110.. Cela permet de garantir que la politique d'accès aux ressources du téléphone 101 n'a pas été altérée.

De l'étape 201, on passe à des étapes d'utilisation du téléphone 101 parmi lesquelles se trouve une étape 202 de lancement d'une application. Par exemple le lancement d'une application de consultation d'un annuaire que comporte le téléphone 101. Dans la pratique, un tel annuaire correspond à une zone d'une mémoire du téléphone 101.

Une fois que l'application est lancée elle va essayer d'accéder, dans une étape 203 à une ou plusieurs ressources du téléphone 101. Lorsqu'une application cherche à accéder à une ressource, cette tentative d'accès est interceptée par le module 111. Au moment de l'interception le module 111 est en connaissance de l'application, via son identifiant idAP, et de la ressource, via son identifiant idR, à laquelle ladite application cherche à accéder.

Dans l'étape 203 le module 111 effectue alors plusieurs actions. Dans une étape 204 le module 111 recherche dans la mémoire 110 l'enregistrement correspondant à l'identifiant idR. Une fois cet enregistrement, par exemple 112.1, trouvé on passe à une étape 205 de recherche de l'application correspondant à l'identifiant idP dans la table 114 de l'enregistrement 112.1.

Si cette recherche 205 aboutit, on passe à une étape 206, sinon on passe à une étape 207.

L'étape 205 consiste en un parcours séquentiel de la table 114 jusqu'à trouver une ligne dont le contenu de la colonne 114a correspond à l'identifiant idAp, ou jusqu'à la fin de la table 114. Cela permet de déterminer une ligne dans la table 114, ou respectivement de conclure à la non présence de l'identifiant idAp dans la table 114.

Dans l'étape 206 le module 111 lit le contenu de la colonne 114b correspondant à la ligne déterminée à l'étape 205. Il s'agit d'une étape de lecture de droit. De l'étape 206 on passe alors à une étape 210 d'application du droit.

Dans l'étape 207 le module 111 cherche à lire un certificat d'identification lié à l'application. Ce certificat est enregistré dans l'application de la même manière que l'identifiant d'application. Si un tel certificat existe on passe à une étape 208, sinon on passe à une étape 209.

Dans l'étape 208 le module 111 commence par vérifier la validité du certificat. A cette fin le mobile comporte un certain nombre de certificats préenregistrés, par exemple, un certificat opérateur dans la carte SIM, un certificat constructeur dans le code de démarrage et un certificat fournisseur de contenus dans le mobile ou la carte SIM. Le certificat de l'application, pour être valable doit être compatible avec l'un des certificats connus du téléphone 101. Cette compatibilité est vérifiée, par exemple, par le chiffrage d'un aléa à partir d'une clé du certificat de l'application, l'un des certificats connus du téléphone devant permettre de récupérer cet aléa.

Dans une variante l'application comporte aussi une signature liée au certificat qu'elle présente. Cette signature est une signature électronique réalisé sur la base de la clé privé du certificat et du contenu de l'application, c'est à dire des codes instructions qui la compose. La vérification s'effectuer donc classiquement à partir de la clé public du certificat et du contenu de l'application.

Si le certificat est valable, alors le module 111 parcourt la table 114 à la recherche du certificat de l'application, ce qui permet, comme pour un identifiant d'application, de déterminer une ligne dans la table 114, et donc de lire des droits. Dans cette variante l'enregistrement 112.x comporte donc une table associant des certificats à des droits d'accès à la ressource identifiée par le contenu du champ 113. Cette association est réalisé à travers une signature du contenu de l'application par le certificat.

Si le certificat est valable, l'étape 208 est suivie de d'une étape 210, sinon elle est suivie de l'étape 209.

Le module 111 aboutit à l'étape 209 s'il a été impossible d'identifier l'application par quelque moyen que ce soit. Dans ce cas les droits appliqués seront des droits par défaut, ceux correspondant au contenu du champ 116.

Dans une variante de l'invention, les doits par défaut sont définis en fonction du propriétaire de la ressource. Si le champs 116 n'est pas renseigné pour une ressource à laquelle souhaite accéder une application, alors il existe une table 118 enregistrée dans un mémoire connectée au bus 105 et associant des droits par défauts à un propriétaire. Les droits à appliquer sont alors chercher dans cette table 118 en fonction de l'identifiant 115 de propriétaire de la ressource qui doit être accédée. Cette table est, par exemple, renseignée au moment de la fabrication du téléphone. Elle peut aussi être mise à jour par la suite.

La détermination des droits par défaut peut aussi, dans une variante, être réalisée sur la base d'un certificat attaché à l'application ou d'un propriétaire de l'application Dans ce cas une application comporte un certificat ou un identifiant de propriétaire. Une mémoire 119 du téléphone 101, connectée au bus 105, comporte alors une table associant un certificat, et ou un propriétaire, à des droits par défaut.

Dans une variante de l'invention La mémoire 119, ou ne autre mémoire non décrite, permet d'associer plusieurs certificats à un certificat dit maître. Ce certificat maître correspond à un propriétaire et donc à des droits associées. En particulier le propriétaire ainsi identifié vie le certificat maître peut modifier les droits associés aux certificats eux mêmes associés au certificat maître.

De l'étape 209 on passe à l'étape 210.

Dans l'étape 210, le module 111 répond à l'application ayant demandé l'accès à une ressource en fonction des droits lus dans l'une des étapes 206, 208 ou 209.

Cette réponse est donc soit, accès autorisé, accès refusé, demander l'autorisation à l'utilisateur, demander la saisie d'un code, demander un challenge cryptographique.

De manière fine l'accès peut être autorisé en lecture, écriture, modification, destruction, exécution.

La demande d'autorisation à l'utilisateur se traduit par un message affiché sur l'écran 107. Ce message est du type "l'application Ap veut accéder à R. Autoriser : oui/non ?".

La demande de code à l'utilisateur se traduit par un message affiché sur l'écran 107. Ce message est du type "l'application Ap veut accéder à R. Saisir code:".

Dans la cas d'un challenge cryptographique, il n'y a pas de demande d'autorisation de l'utilisateur, le téléphone gérant lui-même l'autorisation d'accès de l'application si les réponses aux challenges cryptographiques sont conformes aux attentes du module 111.

Les réponses à ces messages déterminent la suite de l'exécution de l'application. En d'autres termes, si les réponses à ces questions sont oui, le bon code, ou les challenges cryptographiques sont valides, alors l'accès est autorisé, sinon l'accès est refusé.

Dans une variante de l'invention l'application peut être autorisée pour un nombre N, paramétrable, d'accès.

De l'étape 203 on passe à une étape 211 de poursuite de l'exécution de l'application. Dans cette étape l'application reçoit la réponse du module 111 relativement à sa demande d'accès à une ressource. Si la réponse est positive alors l'exécution se poursuit normalement, sinon l'exécution est interrompue.

Dans une variante de l'invention le composant 111 garde et maintient un contexte relatif à l'autorisation accordée pour ladite application ou instance d'application d'accéder à la ressource de façon à augmenter les performances du système pour ne pas avoir à retester en permanence les droits d'accès aux ressources. Il y a donc une gestion d'une table 117 enregistrée dans une mémoire connectée au bus 105, temporaire et dynamique d'autorisation indexée par idAP et contenant les ressources autorisées, ou indexée par idAP et l'identification de l'instance dans le cas où l'application est instanciée plusieurs fois. La table 117 est par exemple une mémoire cache conservant les résultats des interrogations faites à l'étape 203. In n'est ainsi plus utile d'accéder à la mémoire 110 pour obtenir la réponse à une interrogation ayant déjà été traitée. Dans un autre exemple la mémoire 117 est une copie d'une partie de la mémoire 110, ladite partie correspondant à des morceaux de tables d'identifiants d'application, ces morceaux de tables étant ceux ayant déjà été parcouru.

Dans une autre variante les droits d'accès à la ressource sont aussi mémorisés dans la table temporaire et relâchés lors de la libération de la ressource.

Dans encore une autre variante, les autorisations d'accès peuvent être alloués pour une durée d'usage prédéterminée et relâchées lors de la libération de la ressource ou à l'échéance de la durée d'usage allouée, la définition de cette durée pouvant être globale pour toutes les ressources du mobile, spécifique par application, spécifique par ressource accédée. Le calcul du temps d'usage de la ressource ou des ressources pouvant être réalisé avec la mise en oeuvre d'un compteur de temps, de façon atomique par ressource, par application, par application et par ressource, ou de façon globale par application pour un ensemble de ressources, par ressource pour un ensemble d'applications ou pour un ensemble d'applications pour un ensemble de ressources. Dans cette variante, par exemple, on utilise la table 117 en associant à chaque résultat d'interrogation une condition de validité qu'elle soit temporelle, en nombre d'interrogation, ou géographique. Dès que la condition de validité expire, l'entrée correspondante de la table 117 est supprimé et il faut à nouveau parcourir la mémoire 110.

Dans une autre variante, les autorisations d'accès et les droits d'accès peuvent être alloués pour un espace géographique prédéterminé, le fait pour le mobile de sortir des conditions définies par l'espace géographique entraîne automatiquement la libération de la ressource. La condition d'usage liée à cet espace géographique peut être définie de façon similaire à la définition des durées d'usage, c'est-à-dire de façon atomique ou globale par ressource et/ ou par application, pour plusieurs ressources et/ou plusieurs applications.

Dans une variante de l'invention l'autorisation d'un nombre prédéterminé N d'accès, peut être donnée de façon similaire à la définition des durées d'usage, c'est-à-dire de façon atomique ou globale par ressource et /ou par application, pour plusieurs ressources et /ou plusieurs applications.

Dans la mesure où la mémoire 110 est elle-même une ressource, son accès, notamment en modification, est soumis au même mécanisme d'autorisation. On note ici qu'une mémoire, par exemple la mémoire 114, peut correspondre à plusieurs ressources, une ressource regroupant les enregistrements correspondant à des fonctionnalités opérateur de réseau, une ressource regroupant les enregistrements correspondant à des fonctionnalités utilisateur une ressource regroupant les enregistrements correspondant à des fonctionnalités constructeur du mobile et une ressource regroupant les enregistrements correspondant à des fonctionnalités fournisseur de contenus. Chacune de ces ressources est mise à jour par une application particulière ne pouvant être lancée que par, respectivement, l'opérateur de réseau, l'utilisateur, le système d'exploitation et le fournisseur de contenus.

Dans une variante de l'invention, l'enregistrement 114 comporte un champ 115 identifiant de propriétaire. Dans cette variante une application cherchant à modifier le contenu de l'enregistrement 114 ne peut le faire que si ladite application et l'enregistrement 114 ont le même propriétaire

Ces mécanismes de sécurité permettent de gérer efficacement une politique de sécurité du téléphone tout en permettant un cloisonnement des ressources par propriétaire de ces ressources, c'est-à-dire que seul le propriétaire d'une ressource peut modifier les droits d'accès à cette ressource.

Ces mécanismes permettent une grande souplesse dans la gestion des droits d'usage, puisque une application identifiée par le système d'exploitation et gérée par le module 111 peut aussi être identifiée comme une ressource du téléphone, cela est particulièrement vrai dans le cadre de téléchargement de jeux. Un jeu étant à la fois une application avec des droits restreints et une ressource devant être protégée contre le copiage et l'usage abusif.

Ainsi une application cherchant à introduire, via une interface série (par exemple Bluetooth), des données dans le téléphone 101 devra être dans la liste des applications autorisées à écrire dans une certaine zone mémoire et dans la liste des applications autorisées à lire la zone mémoire correspondant à une mémoire tampon de réception des données reçues via l'interface série.

Une application cherchant à faire sortir, via une interface série par exemple, des données dans le téléphone 101 devra être dans la liste des applications autorisées à écrire dans une certaine zone mémoire, correspondant à une mémoire tampon d'émission des données via l'interface série. Dans une variante, le module interface série est une ressource et une application voulant émettre des données devra être dans la liste des applications autorisées à mettre en oeuvre le module interface série. Dans cet exemple un utilisateur voulant émettre des données via l'interface série devra utiliser une application autorisée à d'une part, lire ces données, c'est-à-dire que l'application aura des droits enregistrés sur ces données ou ressources et d'autre part, émettre des données via l'interface série. Ici l'interface série est choisie à titre d'exemple, une autre interface de communication peut être utilisée comme illustration de l'invention comme le Wifi, l'infrarouge" ou les diverses possibilités d'extension mémoire externe (voire le bus externe du téléphone). Cela est particulièrement intéressant pour la protection des oeuvres multimédias. En effet, il suffit que l'application de reproduction ('player' en anglais) de l'oeuvre ne soit pas autorisée à reproduire l'oeuvre autrement que via un haut-parleur et/ou un écran, pour empêcher l'oeuvre d'être extraite du téléphone. De la même façon, si l'oeuvre est identifiée comme une ressource, seule l'application de reproduction ('player' en anglais) pourra y accéder et la modifier, les systèmes de gestion de fichiers n'étant plus autorisés à manipuler les oeuvres numériques, toute manipulation de fichiers de ces oeuvres ne pourra être réalisée qu'au travers de l'application de reproduction. Dans une optique gestion des droits numériques, si on considère qu'une application de reproduction est distribuée à grande échelle et que cette application est associée à plusieurs certificats électroniques (un certificat par éditeur du disque ou du cinéma), le fait de définir une oeuvre numérique comme une ressource associée à des certificats électroniques connus de l'application ou du téléphone impliquera que seule l'application peut accéder à ces oeuvres. Dans ce cadre, le propriétaire de l'application et des ressources (oeuvres encodées numériquement) étant le fournisseur du contenu, ni l'utilisateur du téléphone, ni l'opérateur, ni le constructeur, ni les autres fournisseurs de contenus ne peuvent altérer les droits associés à cette application et aux ressources (oeuvres encodées numériquement).

Dans une variante de l'invention, une application du constructeur installée dans le mobile a le droit de lire, écrire et d'effacer toutes les zones mémoires réservées à l'usage du mobile (purge ou nettoyage d'une zone mémoire). Dans une variante de l'invention une authentification de l'utilisateur de cette application peut être mise en place.

De manière à optimiser l'utilisation de l'invention, lors de l'installation d'une nouvelle application sur le téléphone mobile, cette application est analysée de manière à y détecter tous les appels à des ressources du téléphone. L'identifiant de la nouvelle application est alors inscrit dans les tables d'identifiants en fonction soit des droits par défaut, soit de réponses à des questions posées à l'utilisateur du téléphone. L'application d'analyse des applications a donc les droits requis pour accéder à la ressource correspondant à la gestion de droits. Cette application fait en fait partie du système d'exploitation.

Dans une variante de l'invention le téléphone 101 comporte un programme, installé par la constructeur, pouvant lire, écrire et effacer toute les zones mémoire du mobile. Un tel programme est, par exemple, n programme de réinitialisation.

## Revendications

1. Procédé de gestion sécurisée de l'exécution d'applications sur un téléphone (101) mobile, une application (108c) accédant à des ressources (108a) du téléphone mobile gérées par un système d'exploitation, **caractérisé en ce que** ;
- différentes ressources du téléphone mobile sont identifiables et associées chacune à une table, ladite table comportant des identifiants d'applications associés à des droits d'accès à la ressource, lors de l'installation de l'application, ladite application est analysée de manière à y détecter tous les appels à des ressources du téléphone, et à inscrire dans les tables l'identifiant de l'application en fonction soit des droits par défaut soit de réponses à des questions posées à l'utilisateur du téléphone,
- la ressource ayant un propriétaire (115), seul autorisé à modifier chaque droits d'accés à cette ressource après ladite installation,
- le système d'exploitation recherchant et appliquant pour chaque ressource accédée les droits correspondant à chaque instance d'application accédante, chaque application comportant un identifiant (idAp) unique.

2. Procédé selon la revendication 1 **caractérisé en ce que** le système d'exploitation gère une table dynamique et temporaire par identifiant d'application permettant de maintenir les autorisations d'usage des ressources déjà autorisées pour chacune des applications.

3. Procédé selon la revendication 2 **caractérisé en ce que** le système d'exploitation relâche les autorisations d'accès à une ressource pour l'application identifiée à l'échéance du temps alloué, ou à la sortie d'un espace géographique prédéterminé.

4. Procédé selon l'une des revendications 1 à 3, **caractérisé en ce que** les ressources du système d'exploitation comportent des mémoires et/ou zones mémoires du téléphone mobile.

5. Procédé selon l'une des revendications 1 à 4, **caractérisé en ce que** les ressources du système d'exploitation comportent les moyens de communications pour le téléphone mobile.

6. Procédé selon l'une des revendications 1 à 5, **caractérisé en ce que** l'accès aux ressources est centralisé au niveau d'une interface programmatique, cette interface permettant l'accès à une ressource si l'application cherchant à accéder à cette ressource possède les droits requis.

7. Procédé selon l'une des revendications 1 à 6, **caractérisé en ce que** chaque table d'identifiants d'applications associée à une ressource comporte un identifiant (116) correspondant aux applications non listées dans la table pour définir les droits par défaut d'une application.

8. Procédé selon l'une des revendications 1 à 7, **caractérisé en ce que** des droits par défauts peuvent être définis pour les accès aux ressources d'un même propriétaire, cette définition pouvant être réalisée lors de la configuration du mobile en sortie de fabrication.

9. Procédé selon l'une des revendications 1 à 8, **caractérisé en ce que** une table d'identifiants comportant des entrées correspondant à des certificats électroniques permet de rassembler sous un même propriétaire plusieurs familles de certificats électroniques.

10. Procédé selon l'une des revendications 1 à 9, **caractérisé en ce que** un accès à une ressource est compris dans l'ensemble comportant au moins les éléments suivants : lecture, écriture, modification, destruction, exécution, de données ou de code exécutable.

11. Procédé selon l'une des revendications 1 à 10, **caractérisé en ce que** au démarrage du téléphone un programme de démarrage vérifie l'intégrité des tables d'identifiants et de la partie du système d'exploitation accédant à ces tables d'identifiants.

12. Procédé selon l'une des revendications 1 à 11, **caractérisé en ce que** au démarrage du téléphone un programme de démarrage vérifie l'intégrité des parties du système d'exploitation en charge des fonctions de contrôle et de sécurité du téléphone, ces contrôles au démarrage du mobile permettant de garantir que seul le système et exclusivement le système d'exploitation original du constructeur est installé dans le téléphone et utilisé par celui-ci.

13. Procédé selon l'une des revendications 1 à 12, **caractérisé en ce que** un droit d'accès à une ressource est compris dans l'ensemble comportant au moins les éléments suivants : accès autorisé, accès autorisé une fois, accès autorisé N fois, N étant paramétrable, accès refusé, demander l'autorisation à l'utilisateur une fois, demander l'autorisation à l'utilisateur pour chaque accès, demander l'autorisation à l'utilisateur pour N accès, N étant paramétrable, demander la saisie d'un code une fois, demander la saisie d'un code pour chaque accès, demander la saisie d'un code pour N accès, N étant paramétrable, demander un calcul ou un challenge cryptographique pour autoriser l'accès une fois, demander un calcul ou un challenge cryptographique pour autoriser chaque accès, demander un calcul ou un challenge cryptographique pour autoriser N accès, N étant paramétrable.

14. Procédé selon l'une des revendications 1 à 13, **caractérisé en ce que** la table d'identifiants d'applications a une taille dynamique.

15. Procédé selon l'une des revendications 1 à 14, **caractérisé en ce que** chaque nouvelle application est analysée pour mettre à jour les tables d'identifiants d'applications.

16. Procédé selon l'une des revendications 1 à 15, **caractérisé en ce qu'**une application du constructeur installée dans le mobile a le droit de lire, écrire, effacer toutes les zones mémoires réservées à l'usage du mobile.

## Claims

1. A method for securely managing the running of applications on a mobile telephone (101), an application (108c) accessing resources (1 08a) of the mobile telephone which are managed by an operating system, **characterised in that**:
- different resources of the mobile telephone can be identified and are each associated to a table, said table including application identifiers associated to the access rights for the resource,
- during installation of the application, said application is analysed in such a way as to detect all requests for the telephone's resources and to record the application identifier in the tables according to either the default rights or the answers to questions which the telephone user is asked,
- each resource having an owner (115), who is the only person authorised to modify the access rights for this resource after said installation,
- the operating system searching for and applying the rights for each resource which correspond to each instance of the accessing application, each application including a unique identifier (idAp).

2. A method according to claim 1, **characterised in that** the operating system manages a dynamic and temporary table by an application identifier enabling the authorisations for use of the resources already authorised for each application to be maintained.

3. A method according to claim 2, **characterised in that** the operating system gives authorisations for access to a resource for the identified application during the allocated time, or after the output of a predetermined geographical space.

4. A method according to one of claims 1 to 3, **characterised in that** the resources of the operating system include memories and/or memory zones of the mobile telephone.

5. A method according to one of claims 1 to 4, **characterised in that** the resources of the operating system include communication means for the mobile telephone.

6. A method according to one of claims 1 to 5, **characterised in that** access to the resources is centralised on a programming interface, this interface enabling access to a resource if the application seeking access to this resource has the required rights.

7. A method according to one of claims 1 to 6, **characterised in that** each table of application identifiers associated to a resource includes an identifier (116) corresponding to the applications not listed in the table in order to define the default rights of an application.

8. A method according to one of claims 1 to 7, **characterised in that** the default rights can be defined for access to the resources with the same owner, this definition capable of being performed during the configuration of the mobile when leaving manufacture.

9. A method according to one of claims 1 to 8, **characterised in that** an identifier table including inputs corresponding to electronic certificates enables several families of electronic certificates to be grouped together under the same owner.

10. A method according to one of claims 1 to 9, **characterised in that** access to a resource is included in the unit including at least the following elements: reading, writing, modification, destruction, running of data or executable code.

11. A method according to one of claims 1 to 10, **characterised in that** when turning the telephone on, a start-up programme checks the integrity of the identifier tables and the part of the operating system accessing these identifier tables.

12. A method according to one of claims 1 to 11, **characterised in that** when turning the telephone on, a start-up programme checks the integrity of the parts of the operating system in charge of the checking and security functions of the telephone, these checks when turning the mobile on enabling it to be assured that only the operating system and exclusively the operating system originating from the constructor is installed on the telephone and used by the latter.

13. A method according to one of claims 1 to 12, **characterised in that** an access right for a resource is included in the unit including at least the following elements: access authorised, access authorised once, access authorised N times, N being parameterisable, access denied, request authorisation from the user once, request authorisation from the user for each access attempt, request authorisation from the user for N number of access attempts, N being parameterisable, request a code to be entered once, request a code to be entered for each access attempt, request a code to be entered for N number of access attempts, N being parameterisable, request a calculation or a cryptographic puzzle to authorise access once, request a calculation or a cryptographic puzzle to authorise each access attempt, request a calculation or a cryptographic puzzle to authorise N number of access attempts, N being parameterisable.

14. A method according to one of claims 1 to 13, **characterised in that** the application identifier table is dynamic in size.

15. A method according to one of claims 1 to 14, **characterised in that** each new application is analysed in order to update the application identifier tables.

16. A method according to one of claims 1 to 15, **characterised in that** a constructor application installed on the mobile has the right to read, write, and erase all memory zones reserved for mobile usage.

## Patentansprüche

1. Verfahren zur sicheren Verwaltung der Ausführung von Anwendungen in einem Mobiltelefon (101), wobei eine Anwendung (108c) Zugriff auf Ressourcen (108a) des Mobiltelefons hat, die von einem Betriebssystem verwaltet werden, **dadurch gekennzeichnet, dass**
- verschiedene Ressourcen des Mobiltelefons identifizierbar, und jeweils einer Tabelle zugeordnet sind, wobei die besagte Tabelle Benutzeridentifizierungen für die Anwendungen enthält, die jeweils Zugriffsrechten auf die Ressourcen bei der Installierung der Anwendung zugeordnet sind, und die besagte Anwendung derart analysiert wird, dass dort alle Aufrufe der Ressourcen des Telefons erfasst werden, und dass die Benutzeridentifizierung der Anwendung entweder in Abhängigkeit von standardmäßigen Zugriffsrechten oder von Antworten auf Fragen in die Tabelle eingetragen wird, die dem jeweiligen Benutzer des Telefons gestellt werden.
- jede Ressource einen Besitzer (115) hat, der als einziger befugt ist, die Zugriffsrechte auf diese Ressource nach der besagten Installierung zu ändern.
- das Betriebssystem für jede erreichte Ressource nach jenen Rechten sucht und diese anwendet, die jeder zugreifenden Anwendungsinstanz entsprechen, wobei jede Anwendung eine einzige Benutzeridentifizierung (idAp) enthält.

2. Verfahren nach Anspruch 1, **dadurch gekennzeichnet, dass** das Betriebssystem eine dynamische und vorläufige Tabelle je Anwendungs-Benutzeridentifizierung verwaltet, anhand derer es möglich ist, die Benutzungsfreigaben für die Ressourcen aufrecht zu erhalten, die bereits für jede der Anwendungen freigegeben sind.

3. Verfahren nach Anspruch 2, **dadurch gekennzeichnet, dass** das Betriebssystem die Freigaben für den Zugriff auf eine Ressource für die identifizierte Anwendung nach Ablauf einer zugestandenen Zeit oder bei Verlassen einer vorbestimmten geografischen Zone aufhebt.

4. Verfahren nach einem der Ansprüche 1 bis 3, **dadurch gekennzeichnet, dass** die Ressourcen des Betriebssystems Speicher und/ oder Speicherzonen des Mobiltelefons enthalten.

5. Verfahren nach einem der Ansprüche 1 bis 4, **dadurch gekennzeichnet, dass** die Ressourcen des Betriebssystems Kommunikationsmittel für das Mobiltelefon enthalten.

6. Verfahren nach einem der Ansprüche 1 bis 5, **dadurch gekennzeichnet, dass** der Zugriff auf die Ressourcen im Bereich einer Programmschnittstelle zentralisiert ist, wobei diese Schnittstelle den Zugriff auf eine Ressource ermöglicht, wenn die Anwendung, die auf diese Ressource zugreifen möchte über die benötigten Rechte verfügt.

7. Verfahren nach einem der Ansprüche 1 bis 6, **dadurch gekennzeichnet, dass** jede Tabelle mit den Benutzeridentifizierungen der Anwendungen, die einer Ressource zugeordnet ist, eine Benutzeridentifizierung (116) enthält, die den Anwendungen entspricht, die nicht in der Tabelle aufgelistet sind, um die standardmäßige Rechte einer Anwendung festzulegen.

8. Verfahren nach einem der Ansprüche 1 bis 7, **dadurch gekennzeichnet, dass** standardmäßige Rechte für die Zugriffe auf die Ressourcen eines selben Besitzers festgelegt werden können, wobei diese Festlegung bei der Konfiguration des Mobiltelefons unmittelbar nach dessen Herstellung erfolgen kann.

9. Verfahren nach einem der Ansprüche 1 bis 8, **dadurch gekennzeichnet, dass** es eine Tabelle mit den Benutzeridentifizierungen, die Eingänge entsprechend elektronischen Zertifikaten enthält, ermöglicht, unter einem selben Benutzer mehrere Gruppen an elektronischen Zertifikaten zusammenzufassen.

10. Verfahren nach einem der Ansprüche 1 bis 9, **dadurch gekennzeichnet, dass** ein Zugriff auf eine Ressource in der Einheit bestehend aus zumindest den folgenden Elementen enthalten ist: Lesen, Schreiben, Ändern, Zerstören, Ausführen von Daten oder ausführbaren Codes.

11. Verfahren nach einem der Ansprüche 1 bis 10, **dadurch gekennzeichnet, dass** ein Startprogramm beim Einschalten des Telefons überprüft, ob alle Tabellen mit den Benutzeridentifizierungen vollständig sind und jener Teil des Betriebssystems vorhanden ist, der auf diese Tabellen mit den Benutzeridentifizierungen zugreift.

12. Verfahren nach einem der Ansprüche 1 bis 11, **dadurch gekennzeichnet, dass** ein Startprogramm beim Einschalten des Telefons überprüft, ob die Teile des Betriebssystems vollständig sind, die mit den Kontroll- und Sicherheitsfunktionen des Telefons zu tun haben, wobei es durch diese Kontrollen beim Einschalten des Telefons möglich ist, sicherzustellen, dass einzig und allein das originale Betriebssystem des Herstellers im Telefon installiert ist, und von diesem verwendet wird.

13. Verfahren nach einem der Ansprüche 1 bis 12, **dadurch gekennzeichnet, dass** ein Zugriffsrecht auf eine Ressource in einer Einheit bestehend aus zumindest den folgenden Elementen enthalten ist: Zugriff freigegeben, Zugriff einmal freigegeben, Zugriff N Mal freigegeben, N ist dabei parametrierbar, Zugriff abgelehnt, Freigabe einmal beim Benutzer beantragen, Freigabe bei jedem Zugriff beim Benutzer beantragen, Freigabe beim Benutzer für N Zugriffe beantragen, N ist dabei parametrierbar, die Eingabe eines Codes einmal beantragen, die Eingabe eines Codes bei jedem Zugriff beim Benutzer beantragen, die Eingabe eines Codes für N Zugriffe beantragen, N ist dabei parametrierbar, eine Berechnung oder eine kryptografische Herausforderung zur Freigabe jedes Zugriffs beantragen, eine Berechnung oder eine kryptografische Herausforderung zur Freigabe von N Zugriffen beantragen, N ist dabei parametrierbar.

14. Verfahren nach einem der Ansprüche 1 bis 13, **dadurch gekennzeichnet, dass** die Tabelle mit den Benutzeridentifizierungen der Anwendungen eine dynamische Größe aufweist.

15. Verfahren nach einem der Ansprüche 1 bis 14, **dadurch gekennzeichnet, dass** jede neue Anwendung analysiert wird, um die Tabellen mit den Benutzeridentifizierungen der Anwendungen auf den neuesten Stand zu bringen.

16. Verfahren nach einem der Ansprüche 1 bis 15, **dadurch gekennzeichnet, dass** eine Anwendung des Herstellers, die im Mobiltelefon installiert ist, alle Speicherzonen, die der Verwendung des Mobiltelefons vorbehalten sind, lesen, schreiben und löschen darf.
